(19) Europäisches Patentamt
European Patent Office
Office européen des brevets

(11) **EP 4 123 583 A1**

(12) **EUROPEAN PATENT APPLICATION**

(43) Date of publication:
**25.01.2023 Bulletin 2023/04**

(21) Application number: **21186830.2**

(22) Date of filing: **21.07.2021**

(51) International Patent Classification (IPC):
**G06T 11/00** *(2006.01)* **G06T 5/00** *(2006.01)*

(52) Cooperative Patent Classification (CPC):
**G06T 5/006; G06T 11/00;** G06T 2207/20081;
G06T 2207/20084; G06T 2207/30148

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **ASML Netherlands B.V.
5500 AH Veldhoven (NL)**

(72) Inventors:
• **PISARENCO, Maxim
5500 AH Veldhoven (NL)**

• **MIDDLEBROOKS, Scott, Anderson
5500 AH Veldhoven (NL)**
• **VAN KRAAIJ, Markus, Gerardus, Martinus, Maria
5500 AH Veldhoven (NL)**
• **VERSCHUREN, Coen, Adrianus
5500 AH Veldhoven (NL)**

(74) Representative: **ASML Netherlands B.V.
Corporate Intellectual Property
P.O. Box 324
5500 AH Veldhoven (NL)**

(54) **ALIGNING A DISTORTED IMAGE**

(57)    Disclosed herein is a non-transitory computer readable medium that has stored therein a computer program, wherein the computer program comprises code that, when executed by a computer system, instructs the computer system to perform a method for generating synthetic distorted images, the method comprising: obtaining an input set that comprises a plurality of distorted images; determining, using a model, distortion modes of the distorted images in the input set; generating a plurality of different combinations of the distortion modes; generating, for each one of the plurality of combinations of the distortion modes, a synthetic distorted image in dependence on the combination; and including each of the synthetic distorted images in an output set.

Fig. 8

EP 4 123 583 A1

**Description**

**FIELD**

The present disclosure relates to methods for determining the operation of an encoder-decoder network and for aligning a distorted image using an encoder-decoder network, in particular for device manufacturing using lithographic apparatus. The present disclosure also relates to methods for increasing the training set of images for a machine learning technique, such as the encoder-decoder network.

**BACKGROUND**

A lithographic apparatus is a machine that applies a desired pattern onto a substrate, usually onto a target portion of the substrate. A lithographic apparatus can be used, for example, in the manufacture of integrated circuits (ICs). In that instance, a patterning device, which is alternatively referred to as a mask or a reticle, may be used to generate a circuit pattern to be formed on an individual layer of the IC. This pattern can be transferred onto a target portion (e.g. including part of a die, one die, or several dies) on a substrate (e.g., a silicon wafer). Transfer of the pattern is typically via imaging onto a layer of radiation-sensitive material (resist) provided on the substrate. In general, a single substrate will contain a network of adjacent target portions that are successively patterned.

Most semiconductor devices require a plurality of pattern layers to be formed and transferred onto the substrate. For proper functioning of the device, there is usually a limit on the tolerable error in the positioning of edges, quantified in an edge placement error or EPE. EPE can arise because of errors in the relative positioning of successive layers, known as overlay, or due to errors in the dimensions (specifically the critical dimension or CD) of features. With the continual desire in the lithographic art to reduce the size of features that can be formed (shrink), the limits on EPE are becoming stricter.

Overlay can arise from a variety of causes in the lithographic process, for example errors in the positioning of the substrate during exposure and aberrations in the projected image. Overlay can also be caused during process steps, such as etching, which are used to transfer the pattern onto the substrate. Some such process steps generate stresses within the substrate that lead to local or global distortions of the substrate. The formation of three dimensional structures on the substrate, such as is required for recently developed memory types and MEMS, can also lead to significant distortions of the substrate. CD variation can also derive from a variety of causes, including dose or focus errors.

**SUMMARY**

The present disclosure aims to enable more accurate metrology, e.g. for use in lithographic device manufacturing processes.

According to an embodiment, there is provided a non-transitory computer readable medium that has stored therein a computer program, wherein the computer program comprises code that, when executed by a computer system, instructs the computer system to perform a method for generating synthetic distorted images, the method comprising:

obtaining an input set that comprises a plurality of distorted images;
determining, using a model, distortion modes of the distorted images in the input set;
generating a plurality of different combinations of the distortion modes;
generating, for each one of the plurality of combinations of the distortion modes, a synthetic distorted image in dependence on the combination; and
including each of the synthetic distorted images in an output set.

According to an embodiment, there is provided a computer-implemented method for generating synthetic distorted images, the method comprising:

obtaining an input set that comprises a plurality of distorted images;
determining, using a model, distortion modes of the distorted images in the input set;
generating a plurality of different combinations of the distortion modes;
generating, for each one of the plurality of combinations of the distortion modes, a synthetic distorted image in dependence on the combination; and
including each of the synthetic distorted images in an output set.

According to an embodiment, there is provided a computer program comprising code that, when executed by a computer system, instructs the computer system to perform any of the above-described methods.

According to an embodiment, there is provided a non-transitory computer readable medium that has stored therein any of the above-described computer programs.

According to an embodiment, there is provided a system for generating synthetic distorted images, the system comprising one or more processors configured by machine-readable instructions to perform any of the above-described methods.

According to an embodiment, there is provided a method for training a machine learning model, the method comprising:

> receiving a plurality of distorted images;
> generating a plurality of synthetic distorted images in dependence on distortions in the received distorted images; and
> training the machine learning model in dependence on the generated synthetic distorted images.

According to an embodiment, there is provided a computer program comprising code that, when executed by a computer system, instructs the computer system to perform a method of any of the above-described methods.

According to an embodiment, there is provided a non-transitory computer readable medium that has stored therein any of the above-described computer programs.

According to an embodiment, there is provided a system for training a machine learning model, the system comprising one or more processors configured by machine-readable instructions to perform any of the above-described methods.

According to an embodiment, there is provided a method for aligning a distorted image, the method comprising:

> determining a transformation, by use of a machine learning model, for aligning a distorted image; and
> aligning the distorted image based on the determined transformation;
> wherein the machine learning model has been trained according to any of the above-described methods.

According to an embodiment, there is provided a computer program comprising code that, when executed by a computer system, instructs the computer system to perform any of the above-described methods.

According to an embodiment, there is provided a non-transitory computer readable medium that has stored therein any of the above-described computer programs.

According to an embodiment, there is provided a system for aligning a distorted image, the system comprising one or more processors configured by machine-readable instructions to perform any of the above-described methods.

According to an embodiment, there is provided a method for determining a weighting for use in an encoder-decoder network, the method comprising:

> receiving a plurality of distorted images;
> generating a plurality of synthetic distorted images in dependence on distortions in the received distorted images; and
> determining the weighting in dependence on the synthetic distorted images.

According to an embodiment, there is provided a computer program comprising code that, when executed by a computer system, instructs the computer system to perform any of the above-described methods.

According to an embodiment, there is provided a non-transitory computer readable medium that has stored therein any of the above-described computer programs.

According to an embodiment, there is provided a system for determining a weighting for use in an encoder-decoder network, the system comprising one or more processors configured by machine-readable instructions to perform any of the above-described methods.

According to an embodiment, there is provided a method for aligning a distorted image, the method comprising: performing, using an encoder-decoder network operating with a weighting determined according to any of the above-described methods, the following:

> encoding, using the encoder, a reference image and a distorted image into a latent space to form an encoding;
> decoding, using the decoder, the encoding to form a distortion map; and
> spatially transforming the distorted image using the distortion map so as to obtain an aligned image.

According to an embodiment, there is provided a computer program comprising code that, when executed by a computer system, instructs the computer system to perform any of the above-described methods.

According to an embodiment, there is provided a non-transitory computer readable medium that has stored therein any of the above-described computer programs.

According to an embodiment, there is provided a system for aligning a distorted image, the system comprising one or more processors configured by machine-readable instructions to perform any of the above-described methods.

According to an embodiment, there is provided a method of manufacture of a semiconductor substrate, the method comprising the steps of:

manufacturing at least part of the semiconductor substrate;
performing any of the above-described methods;
analyzing the aligned image to obtain a metric of the image; and
comparing the metric to a target metric and taking remedial action when the metric does not meet the target metric.

According to an embodiment, there is provided a semiconductor substrate manufacturing system comprising apparatuses configured to perform any of the above-described methods.

According to an embodiment, there is provided an inspection tool comprising:

an imaging system configured to image a portion of a semiconductor substrate; and
an image analysis system configured to perform the method for aligning a distorted image according to as defined in any of the above-described methods.

Embodiments will now be described, by way of example, with reference to the accompanying drawings.

**BRIEF DESCRIPTION OF FIGURES**

Figure 1 depicts a lithographic apparatus together with other apparatuses forming a production facility for semiconductor devices.
Figure 2 depicts a flow chart illustrating a method for determining defects in an image.
Figure 3 depicts a flow chart illustrating a method for setting the weightings of an encoder-decoder network.
Figure 4 is a schematic illustration of the method shown in Figure 3 in the exemplary case of a reference image and distorted image of a semiconductor substrate.
Figure 5 depicts a flow chart illustrating a method for obtaining an aligned image.
Figure 6 depicts a flow chart illustrating a method for training an encoder-decoder network of the type utilized in the method of Figure 5.
Figure 7 depicts an illustration of the encoder-decoder network trained according to the method illustrated in Figure 6.
Figure 8 depicts a flow chart illustrating a method for increasing the number of distorted images for use in a training data set.
Figure 9 schematically depicts some of the processes that may occur when generating synthetic distorted images.
Figure 10 schematically depicts a weighted combination process of a plurality of distortion modes.
Figure 11 schematically depicts the use of synthetic distortion maps in the generation of an output set of distorted images.
Figure 12 depicts the performance of different techniques.

**DETAILED DESCRIPTION**

Electronic devices are constructed of circuits typically formed on a piece of silicon called a substrate, which may be referred to as a semiconductor substrate. Of course any other suitable material may be used for the substrate. Many circuits may be formed together on the same piece of silicon and are called integrated circuits or ICs. The size of these circuits has decreased dramatically so that many more of them can fit on the substrate. For example, an IC chip in a smartphone can be as small as a thumbnail and yet may include over 2 billion transistors, the size of each transistor being less than 1/1000th the size of a human hair.

Making these extremely small ICs is a complex, time-consuming, and expensive process, often involving hundreds of individual steps. Errors in even one step have the potential to result in defects in the finished IC, rendering it useless. Thus, one goal of the manufacturing process is to avoid such defects to maximize the number of functional ICs made in the process; that is, to improve the overall yield of the process.

One component of improving yield is monitoring the chip-making process to ensure that it is producing a sufficient number of functional integrated circuits. One way to monitor the process is to inspect the chip circuit structures at various stages of their formation. Inspection can be carried out using a scanning electron microscope (SEM), an optical inspection system, etc. Such systems can be used to image these structures, in effect, taking a "picture" of the structures of the wafer, with a SEM being able to image the smallest of these structures. The image can be used to determine if the structure was formed properly in the proper location. If the structure is defective, then the process can be adjusted, so the defect is less likely to recur.

In order to control errors in a lithographic manufacturing process, such as errors in the relative position of features in different layers (known as overlay) and the size of features (known as CD variation), it is necessary to measure the errors, such as by use of a scanning electron microscope (SEM), an optical inspection system, etc., before corrections can be applied. When using a SEM or other inspection system, images of the substrate are typically obtained and the size of features on the substrate are measured from the images. This allows, for example, determination of CD variation or EPE. However, the images obtained by inspection systems, for example a SEM, are often distorted. Such distortions may, for example, comprise field of view (FOV) distortions which arise as a result of limitations in the electron optical design (similar to e.g. pincushion and barrel distortion in optical systems), as well as effects due to charging (electron beam - sample interaction, leading to e.g. beam bending) As a result of the distortions, measurements of features on the substrate may not be wholly accurate and thus the distortions may introduce an error in the measurements. Given the small tolerances in the measurements of the features on such substrates, errors of this type are less than desirable and may cause the implementation of changes to the manufacturing process which are either not necessary or which are too extreme. One of the current solutions for achieving alignment of the distorted image includes sub-pixel alignment of the distorted image to a reference image. However, this process is extremely computational expensive and thus not suited for the processing of large numbers of distorted images.

Some methods disclosed herein are directed towards using an encoder-decoder network configured to produce a distortion map which may be used to transform a distorted image into an aligned image, with the distortions at least partially removed therefrom. Measurements may then be performed using the aligned image and the accuracy of the measurements may be increased. This may therefore improve the monitoring of the chip making process.

A method disclosed herein comprises determining the weightings, e.g. operational parameters, of an encoder-decoder network such that the encoder-decoder network can take a reference image and a distorted image as an input and output a distortion map representative of the distortion between the distorted image and reference image. This method comprises iterating over a range of test weightings until a distortion map is found which, when applied to the distorted image, returns an aligned image which is similar to the reference image. This method works on the basis that it is known that the aligned image should be similar to the reference image. Another method is disclosed herein which utilizes a pre-trained encoder-decoder network which may be trained by encoding a plurality of different input distortion maps into a latent space, and decoding the encodings to obtain a decoded distortion map. Again, with the aim of the decoded distortion map being as similar possible to the input distortion maps, the weightings of the encoder and decoder may be determined. Once trained, given a reference image and distorted image, the difference between a reference image and the distorted image transformed by a number of different latent vectors may be found. Once a maximum similarity has been determined, the optimal latent vector may be decoded by the trained decoder to return the distortion map. This distortion map can then be applied to the distorted image to return an aligned image.

Some methods disclosed herein also comprise techniques for improving the performance of the encoder-decoder network by increasing the data set used to train the encoder-decoder network. The alignment performance of the encoder-decoder network is dependent on the number of images used to train the encoder-decoder network, as well as the variety of the distorted images. The alignment performance of the encoder-decoder network may therefore be restricted by a lack of pairs of actual distorted images and reference images to train the network with. Disclosed herein is a method for synthesizing realistic distorted images that may also be used to train the encoder-decoder network. The synthetic distorted images may be generated in dependence image deformations that occur in actual distorted images. The synthetic distorted images may therefore comprise realistic image deformations. The method may comprise using a model to determine distortion modes from actual distorted images. Each distortion mode is representative of an image deformation in the actual distorted image. The distortion modes may then be combined in many different ways. For each one of the different combinations of the distortion modes, a synthetic distorted image may be generated in dependence on the combination.

It should be noted that some of the methods disclosed herein may also be used to increase the data set used to train other types of networks, or systems, than the above-described encoder-decoder network.

Before describing embodiments in detail, it is instructive to present an example environment in which the techniques disclosed herein may be implemented.

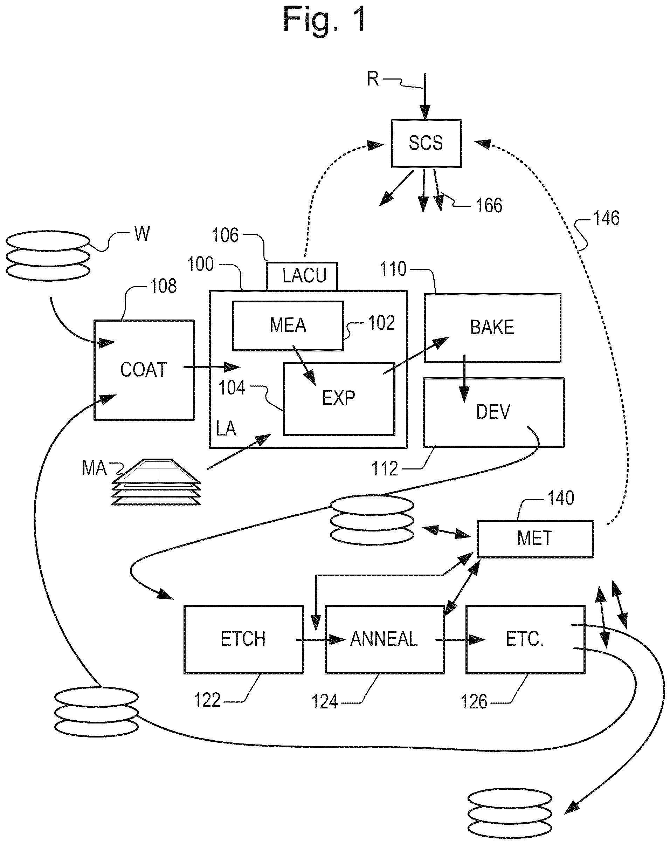

Figure 1 illustrates a typical layout of a semiconductor production facility. A lithographic apparatus 100 applies a desired pattern onto a substrate. A lithographic apparatus is used, for example, in the manufacture of integrated circuits (ICs). In that instance, a patterning device MA, which is alternatively referred to as a mask or a reticle, comprises a circuit pattern of features (often referred to as "product features") to be formed on an individual layer of the IC. This pattern is transferred onto a target portion (e.g., comprising part of, one, or several dies) on a substrate 'W' (e.g., a silicon wafer) via exposure 104 of the patterning device onto a layer of radiation-sensitive material (resist) provided on the substrate. In general, a single substrate will contain a network of adjacent target portions that are successively patterned.

Known lithographic apparatus irradiate each target portion by illuminating the patterning device while synchronously positioning the target portion of the substrate at an image position of the patterning device. An irradiated target portion of the substrate is referred to as an "exposure field", or simply "field". The layout of the fields on the substrate is typically a network of adjacent rectangles or other shapes aligned in accordance to a Cartesian two-dimensional coordinate system (e.g. aligned along an X and an Y-axis, both axes being orthogonal to each other).

A requirement on the lithographic apparatus is an accurate reproduction of the desired pattern onto the substrate. The positions and dimensions of the applied product features need to be within certain tolerances. Position errors may give rise to an overlay error (often referred to as "overlay"). The overlay is the error in placing a first product feature within a first layer relative to a second product feature within a second layer. The lithographic apparatus reduces the overlay errors by aligning each wafer accurately to a reference prior to patterning. This is done by measuring positions of alignment marks which are applied to the substrate. Based on the alignment measurements the substrate position is controlled during the patterning process in order to prevent occurrence of out of tolerance overlay errors. Alignment marks are typically created as part of the product image, forming the reference to which overlay is measured. Alternatively, alignment marks of a previously formed layer can be used.

An error in a critical dimension (CD) of the product feature may occur when the applied dose associated with the exposure 104 is not within specification. For this reason the lithographic apparatus 100 must be able to accurately control the dose of the radiation applied to the substrate. The exposure 104 is controlled by the measurement tool 102 which is integrated into the lithographic apparatus 100. CD errors may also occur when the substrate is not positioned correctly with respect to a focal plane associated with the pattern image. Focal position errors are commonly associated with non-planarity of a substrate surface. The lithographic apparatus reduces these focal position errors by measuring the substrate surface topography using a level sensor prior to patterning. Substrate height corrections are applied during subsequent patterning to assure correct imaging (focusing) of the patterning device onto the substrate.

To verify the overlay and CD errors associated with the lithographic process, the patterned substrates are inspected by a metrology apparatus 140. Common examples of a metrology apparatus are scatterometers and scanning electron microscopes.

A scatterometer conventionally measures characteristics of dedicated metrology targets. These metrology targets are representative of the product features, except that their dimensions are typically larger in order to allow accurate measurement. The scatterometer measures the overlay by detecting an asymmetry of a diffraction pattern associated with an overlay metrology target. Critical dimensions are measured by analysis of a diffraction pattern associated with a CD metrology target. A CD metrology target is used for measuring the result of the most recently exposed layer. An overlay target is used for measuring the difference between the positions of the previous and most recent layers.

An electron beam (e-beam) based inspection tool, such as a scanning electron microscope (SEM), may be well suited for the measurement of small overlay and CD values. In a SEM, a primary electron beam of electrons at a relatively high energy is targeted at a sample, sometimes with a final deceleration step in order to land on the sample at a relatively low landing energy. The beam of electrons is focused as a probing spot on the sample. The interactions between the material structure at the probing spot and the landing electrons from the beam of electrons cause electrons to be emitted from the surface, such as secondary electrons, backscattered electrons or Auger electrons. The generated secondary, backscattered, or Auger electrons may be emitted from the material structure of the sample. By scanning the primary electron beam as the probing spot over the sample surface, such electrons can be emitted across the surface of the sample. By collecting some or all of these types of electrons emitted from the sample surface, a pattern inspection tool may obtain an image representing characteristics of the material structure of the surface of the sample.

Within a semiconductor production facility, lithographic apparatus 100 and metrology apparatus 140 form part of a "litho cell" or "litho cluster". The litho cluster comprises also a coating apparatus 108 for applying photosensitive resist to substrates W, a baking apparatus 110, a developing apparatus 112 for developing the exposed pattern into a physical resist pattern, an etching station 122, apparatus 124 performing a post-etch annealing step and possibly further processing apparatuses, 126, etc.. The metrology apparatus 140 is configured to inspect substrates after development at development apparatus 112, or after further processing (e.g. etching at etching station 122). The various apparatus within the litho cell are controlled by a supervisory control system SCS, which issues control signals 166 to control the lithographic apparatus via lithographic apparatus control unit LACU 106 to perform recipe R. The SCS allows the different apparatuses to be operated giving maximum throughput and product yield. An important control mechanism is the feedback 146 of the metrology apparatus 140 to the various apparatus (via the SCS), in particular to the lithographic apparatus 100. Based on the characteristics of the metrology feedback, corrective actions are determined to improve processing quality of subsequent substrates. The SCS can be one computer or multiple computers, which may or may not communicate. The recipe R can be implemented as one recipe or as multiple independent recipes. For example, the recipe for a process step such as etch may be totally independent of the recipe to inspect the result of that process step (e.g. etch). For example, two or more recipes for individual steps may be interrelated such that one recipe is adjusted to take account of the results of performance of another recipe on the same or a different substrate.

The performance of a lithographic apparatus is conventionally controlled and corrected by methods such as advanced process control (APC) described for example in US2012008127A1. The advanced process control techniques use measurements of metrology targets applied to the substrate. A Manufacturing Execution System (MES) schedules the APC measurements and communicates the measurement results to a data processing unit. The data processing unit translates the characteristics of the measurement data to a recipe comprising instructions for the lithographic apparatus. This method is very effective in suppressing drift phenomena associated with the lithographic apparatus.

The processing of metrology data to corrective actions performed by the processing apparatus is important for semiconductor manufacturing. In addition to the metrology data, characteristics of individual patterning devices, substrates, processing apparatus and other context data may be needed to further optimize the manufacturing process. The framework wherein available metrology and context data is used to optimize the lithographic process as a whole is commonly referred to as part of holistic lithography. For example, context data relating to CD errors on a reticle may be used to control various apparatus (lithographic apparatus, etching station) such that said CD errors will not affect the yield of the manufacturing process. Subsequent metrology data may then be used to verify the effectiveness of the control strategy and further corrective actions may be determined.

To qualify the process window, separate CD and overlay measurements are performed with one or more of the existing tools and combined into an edge placement error (EPE) budget. Often, one metrology step might be performed after development (ADI) and another after an etch step (AEI), and there are inherent difficulties in calibrating two such different measurements to give equivalent results.

EPE is very important to ensure that a semiconductor device is working properly, for example it may affect whether, in a back end of line module, there is sufficient electrical contact. This makes EPE measurements very valuable to ensuring that the process window accommodates a sufficient EPE budget and to controlling the process to remain within window.

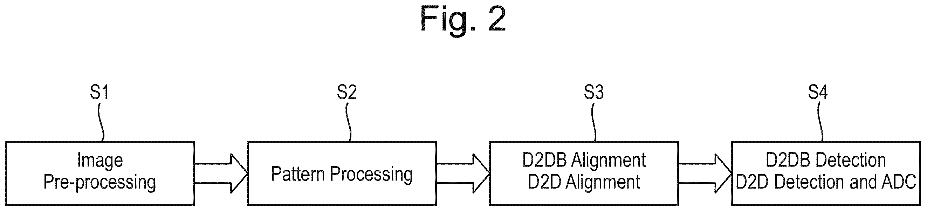

The metrology apparatus 140, that may comprise the above-described SEM, may obtain images of the semiconductor substrate in order to inspect and obtain measurements of the substrate. However, as mentioned previously, the image obtained by the metrology apparatus may be distorted. Figure 2 shows a flow chart illustrating the typical processing of an image for determining defects therein, which includes means for addressing the issue of image distortion. Taking an image obtained using the suitable metrology apparatus 140, which may comprise a SEM, an image pre-processing step S1 is performed. The pre-processing of the image may, for example, comprise any number of suitable pre-processing steps. The pre-processing may comprise image noise estimation, image focus index calculation, image quality enhancement (EQE), of a substrate for determining defects therein. Once this pre-processing has been performed, pattern processing is performed in step S2. The pattern processing may, for example, comprise global alignment of the image. Following global alignment, local alignment in step S3 is performed. This local alignment may comprise die-to-die (D2D) or die-to-database (D2DB) alignment. This local alignment may correct for problems such as distortion or charging. Following alignment in step S3, the final step of default detection is performed in step S4. In this step S4, defect detection and classification may be performed. This may, for example, comprise measuring features of the image to work out CDs or EPEs. These CDs and EPEs may then be compared to predetermined metrics to determine the presence and extent of defects on the substrate.

Field of view (FOV) distortions and charging artefacts affect the direct measurement and comparison of structures in different parts of the field, or between different images if the field of view changes. Prior art techniques for performing local alignment comprise sub-pixel alignment on small patches of images after the global alignment step S2 has been performed. Global alignment may, for example, be on the order of approximately 10 nm. However, this method for local alignment is computationally intensive. As a result, in order to perform such processing, expensive computation systems are required. Furthermore, in the case of a metrology apparatus using a SEM, the computational requirement scales with the number of beams used and soon becomes infeasible.

Some methods disclosed herein aim to address the above problem associated with local alignment and provide an alternative mechanism for achieving local alignment which is less computationally intensive and/or is more accurate.

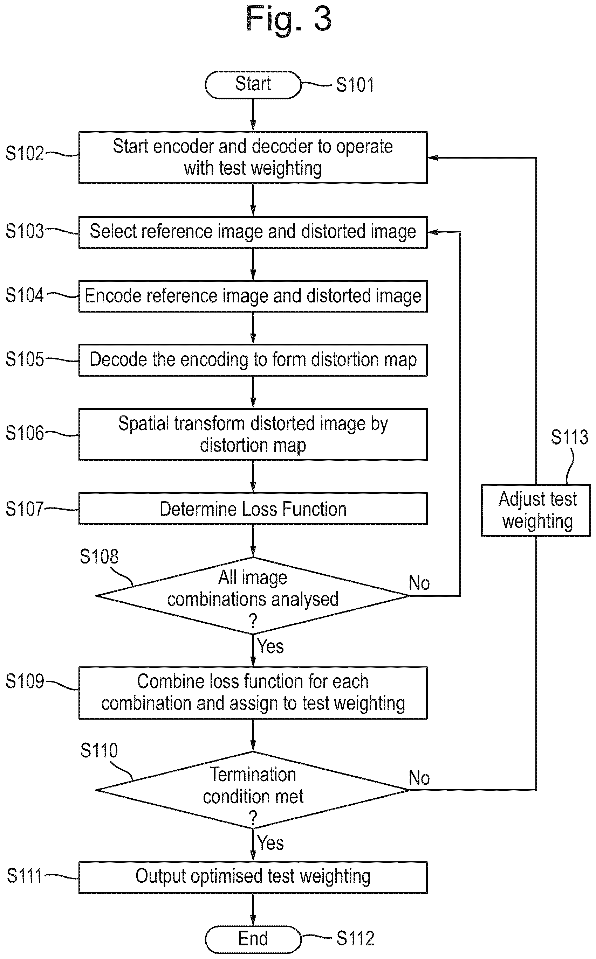

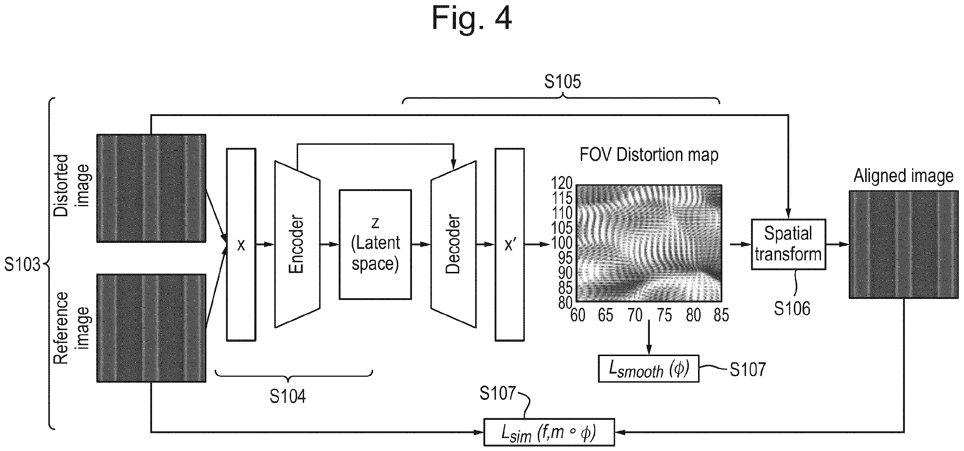

Alignment of a distorted image may be performed using an encoder-decoder network which is configured to encode into, and decode out of, a latent space. There is disclosed herein a method for determining an optimized weighting of an encoder and decoder network; which may perform this purpose. Such a method is illustrated in the flow chart of Figure 3. Some of the steps of the flowchart of Figure 3 are also depicted schematically in Figure 4. The following is with reference to both Figures 3 and 4. The method is initiated at step S101. Steps S102-S110 are iterated to find an optimised test weighting for the encoder-decoder network. In the first iteration of step 102 the encoder and decoder of the network are set to operate with an initial test weighting. The initial test weighting can be selected using a variety of methods. For example all values may be set to maximum, minimum or mid-range values, to random values or to values obtained from a previous use of the method. Step S103 comprises selecting a reference image and a distorted image for analyzing. In step S104, the reference image and distorted image are encoded, using the encoder, into a latent space to form an encoding. Following this step, step S105 is performed in which the encoding is decoded by the decoder to form a distortion map indicative of a difference between the reference image and the distorted image. Once the distortion map has been formed, the distorted image is spatially transformed the by the distortion map to obtain an aligned image in step S106.

With the aligned image obtained, a loss function is determined in step S107. The loss function is at least partially defined by a similarity metric which is obtained by comparing the aligned image to the reference image. The loss metric may be obtained by inputting the reference image and the aligned image into a discriminator network which outputs values depending on the similarity of the images. For example, the network may output values close to 0 for similar inputs and close to 1 for inputs that are significantly different. Of course any metric may be used.

The loss function may also be at least partially defined by a smoothness metric which is defined by the smoothness of the distortion map. Accordingly, the step of determining the loss function in step S107 may further comprise determining a smoothness metric of the distortion map. This smoothness metric shown schematically in Figure 4 as $L_{smooth}(\varphi)$. The smoothness metric may be defined by any suitable measurement of the distortion map which is representative of smoothness. In an example, the smoothness metric is at least partially defined by the spatial gradients of the distortion map. Images of semiconductor substrates that are obtained using a SEM are known to display distortions of the first, second and sometimes the third order. Accordingly, by optimizing the smoothness of the distortion map, i.e. maximizing its smoothness, it may be possible to set the weighting of the encoder-decoder network such that an appropriate distortion map can be generated. Higher frequency distortions can be due to actual differences in the measured geometry of the distorted image, when compared to the reference image, if the distorted image and reference image are obtained from different locations on a substrate, or to noise, and so it may not be desirable to form a distortion map which corrects for these differences. This ensures that the distortion map is indicative of the distortions in the image, rather than other differences between the reference image and the distorted image. In some cases it is expected that the aligned image may have some differences to the reference image, for example if the aligned and reference images are obtained from different places on a substrate or are derived from different modalities (e.g. comparing an SEM image to a mask image, GDSII, or a simulated image).

The method may be performed using only a single reference image and a single distorted image. However, to obtain an encoder-decoder network which is more robust and capable of more accurately aligning a distorted image, the process may be repeated for a number of different combinations of reference images and distorted images. Therefore, the method may include step S108, which involves determining whether all of the appropriate image combinations have been analyzed. If this is not the case, for each test weighting, steps S103 to S107 are repeated for a plurality of different combinations of reference images and distorted images. Any combination of reference images and distorted images may be utilized. For example, the plurality of combinations may comprise combinations of at least one reference image with a plurality of different distorted images. A plurality of different reference images may be used. For example, the plurality of combinations may comprise combinations of a plurality of different reference images with a plurality of different distorted images. Increasing the number of combinations of reference image(s) and distorted images may result in a better optimized test weighting.

Once these steps have been performed for all of the appropriate combinations, the method may then proceed to step S109 in which the loss function for a given test weighting is based on a combination of the loss functions determined for each of the different combinations of reference and distorted images. The loss function for each combination may be combined in any suitable manner. For example, the loss function for each combination may be summed together to provide a total loss function for a particular test weighting.

Having carried out the above method for a particular test weighting, at step S110 it is determined whether a termination condition has been met. The termination condition can be one or more of the following conditions: a predetermined value for the loss function has been achieved; the improvement in the loss function compared to previous iterations is below a predetermined value; a local minimum in the loss function has been found; and a predetermined number of iterations has been performed. If the termination condition is not met, the test weighting is adjusted is Step S113 and the method returns to step S102, and the process described above is repeated, except with a different test weighting. In step S113 the values of the test weighting are adjusted in a manner which is predicted to minimize the loss function. In an embodiment a random component may also be added to prevent the optimization routine becoming trapped in a local minimum.

The loss function L, may thus be determined according to the following equation:

$$L = \underset{w}{\mathrm{argmin}} \sum_i L_{sim}(f_i, m_i \circ \phi(f_i, m_i, w)) + L_{smooth}(\phi(f_i, m_i, w)) \qquad (1)$$

in which w is a particular weighting, $L_{sim}$ is the similarity metric, $L_{smooth}$ is the smoothness metric, $f$ is the reference image, $m$ is the distorted image and $\phi$ is the distortion map. The loss function for each weighting is the sum of the similarity metric and smoothness metric for each image combination, $i$.

Once all the necessary test weightings have been iterated over, the method proceeds to step Sill in which the optimized weighting is determined to be the test weighting which has an optimized loss function. The weighting of the encoder-decoder network is then set as the optimized weighting and the method ends at step S112.

The method described above may not need to iterate over all test weightings if for a particular test weighting, or for a set of test weightings, the loss function indicates that an optimized weighting has been found. For example, the loss function may reach a certain level which is pre-set as being indicative of an optimized weighting. Similarly, the loss function for a plurality of test weightings may indicate the presence of a optimized weighting, without further iterations being performed. For example, the loss function may be minimized for a particular test weighting, and subsequently increase for other test weightings. Based on this information alone, it may be possible to determine that the test weighting which provided the minimized loss function is the optimized weighting without requiring further iterations of other test weightings.

The optimized loss function may depend on the reference image and the aligned image, particularly the type of alignment which is being performed. The optimized loss function may correspond to a maximum similarity between the aligned image and the reference image.

The method described above may be unsupervised and it may not be necessary to provide a ground truth distortion map for each pair of reference and distorted images. This is beneficial because it simplifies the process of training such a model, since only pairs of SEM images are needed and not distortion maps.

The method described above may utilize reference images which are obtained from a database. Images from the database may be upscaled, pixelized and transformed into a simulated image, for example simulated SEM image.

The method described above for determining the weightings of the encoder-decoder network effectively provides a global optimization of the weighting for the encoder-decoder network. Whilst this determination of the optimized weightings may be relatively computationally expensive, it may be performed offline prior to analysis of distorted images of interest. Further, once performed, it provides an encoder-decoder network which is extremely fast in determining a distortion map for a given pair of reference and distorted images. The process may be orders of magnitude faster than prior art techniques. Its evaluation is extremely fast. The use of shared weights w ensures that the generated distortion maps are consistent for different patterns, under the same true distortion.

Another advantage of the method described above is that determining the optimized weighting over larger field of views (vs small patches) has the additional advantage of improved robustness and accuracy. This is because all relevant data is taken into account, strongly reducing the impact of e.g. noise and discretization errors. Actual distortions are spatially relatively very smooth compared to noise/discretization errors and even device features. Therefore, when 'fitting' such distortions over a large range and with very many data points, the resulting 'fit error' averages out and strongly reduces as compared to a situation where a distortion is only determined locally over a small range.

The method described above relates to the setting of the weightings of an encoder-decoder network. There is further disclosed a method using an encoder-decoder network for aligning a distorted image utilizing an encoder-decoder network with its weightings set according to the methods described above. In a first step the method comprises encoding, using the encoder, a reference image and a distorted image into a latent space to form an encoding. Following this, the step of decoding, using the decoder, the encoding to form an optimized distortion map is performed. Next, the step of spatially transforming the distorted image using the distortion map so as to obtain an aligned image is performed. This method substantially corresponds to the method described above with reference to Figures 3 and 4, except without the optimization of the weightings and the repetition for different image combinations. These steps correspond to steps S104, S105, S106 described above, with the encoder-decoder network operating with the optimized test weighting.

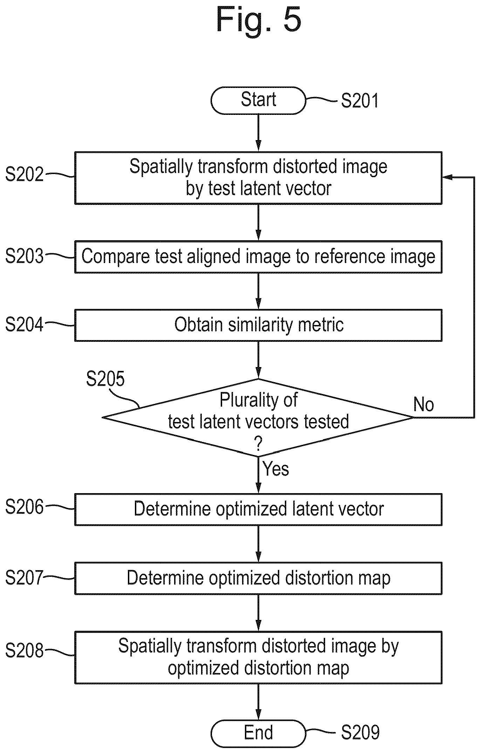

The methods described above relate to the training of an encoder-decoder network and to the use of such a network in encoding a reference image and distorted image into a latent space and outputting a distortion map for transforming the distorted image. Also disclosed herein is a further method for aligning a distorted image. This further method is illustrated in Figure 5. The method uses a pre-trained encoder-decoder network trained to decode from the latent space to produce a distortion map.

The method is initiated in step S201. Following initiation, a distorted image is spatially transformed based on a test latent vector to provide a test aligned image in step S202. Once the test aligned image has been determined, the test aligned image is compared to a reference image in step S203. Following the comparison, a similarity metric is obtained in step S204. The similarity metric is based on the comparison of the aligned image and the reference image. The specific form of the similarity metric may depend on the type of comparison that is performed. At step S205, it is determined whether the plurality of test latent vectors have been tested and if not, the process returns to step S202 and steps S202 to S204 are repeated. It may not be necessary to analyze all of the test latent vectors if an optimal similarity metric is determined before testing all of the test latent vectors.

Once sufficient test latent vectors have been processed, the method proceeds to step S206, which comprises determining an optimized latent vector that corresponds to the test latent vector which results in an optimum value of the similarity metric. The optimized similarity metric may be preset before the beginning of the process, e.g. it may be the similarity metric which is below a certain level, or it may be the similarity metric which corresponds to the most similar aligned image to the reference image. With the optimized latent vector determined, an optimized distortion map is determined in step S207. This is achieved by decoding the optimized latent vector with the pre-trained decoder. In step S208, the distorted image is spatially transformed by the optimized distortion map to output an aligned image. The process then ends at step S209. This method effectively utilizes a distribution of distortion maps that are encoded into the latent space in order to determine the appropriate distortion map for a given pair of reference and distorted images. By performing the optimization in the latent space, the dimensionality of the optimization problem is reduced, thus making the process less computationally expensive. Through performing the optimization in the latent space, this may allow gradient-based optimization to efficiently guide the search for the optimized latent vector.

The similarity metric in this method may be any suitable metric that is indicative of the similarity between the reference image and the test aligned image. For example, the similarity metric obtained in step S204 above may be determined by squaring the difference between the reference image and the test aligned image. In this case, the similarity metric will be smaller the more similar the test aligned image is to the reference image. Therefore, in this case, the optimized latent vector may correspond to the test latent vector for which the similarity metric is minimized. The process described above for finding the optimized latent vector, $z^*$, in the case of squaring the difference between the reference image and aligned image is described mathematically in the following equation:

$$z^* = \operatorname*{argmin}_{z \in R^k} \| f - m \circ D(z) \|^2 \qquad (2)$$

in which $R^k$ is the k-dimensional real-valued space of latent vectors, $f$ is the reference image, $m$ is the distorted image and $D(z)$ is the distortion map obtained by decoding $z$ using the pre-trained encoder-decoder network. As described above, once the optimized latent vector, $z^*$ is found (e.g. using a gradient descent or similar algorithm), the estimated distortion map is computed by a forward pass of the solution through the decoder.

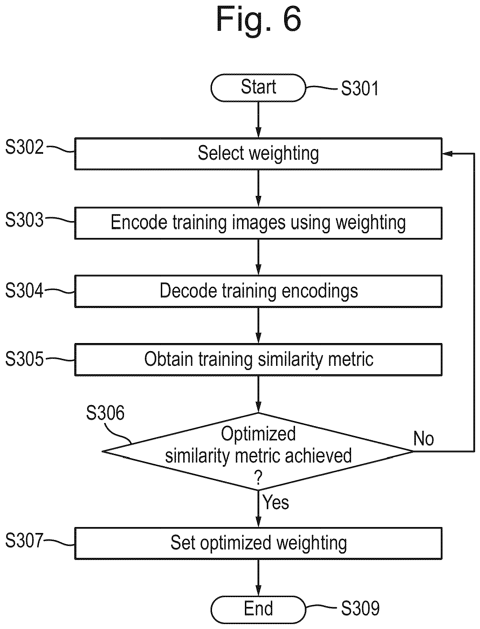

The pre-trained encoder-decoder network used in the method described above may be trained by any suitable means such that it is capable of encoding and decoding the images in the required manner. Figure 6 is a flowchart depicting an exemplary method for training the pre-trained encoder-decoder. The training is initiated in step S301. Following initiation, a weighting of the encoder-decoder network is set in step S302. This weighting determines how the encoder encodes into the latent space and how the decoder decodes out of the latent space. With the weighting set, training images are encoded into a latent space to form training encodings in step S303.

The training encodings are then decoded in step S304 to form decoded images. The decoded images are then compared to the training images initially encoded by the encoder, so as to obtain a training similarity metric. In step S306, it is determined whether the weighting has resulted in an optimized similarity metric. If this is not the case, the process returns to step S302 and a different test weighting is used and steps S302 to S306 are repeated for as many different weighting as is necessary until an optimized similarity metric is achieved. Once an optimized similarity metric is obtained, the weighting which achieves this optimized similarity metric is used to set the weighting of the encoder-decoder network. These steps therefore form part of the pre-training of the encoder-decoder network. Desirably the auto-encoder is variational, in which case it is able to predict multiple outputs for a single input. Those multiple outputs can be seen as samples coming from a distribution. If the network is certain about the output, all the outputs will be very similar (distribution with low variance). If the network is uncertain about the output, the outputs will be less similar to each other (distribution with high variance). Therefore it is possible to determine the certainty of the prediction generated by the network.

The training similarity metric may be based on a loss function which is classical, or a metric which is learned directly from the data using a discriminator network. The discriminator network learns to distinguish between real and fake distortion maps, thereby generating a learned similarity metric; the more real the image is predicted to be by the discriminator, the more similar it is to the ground truth (and vice versa).

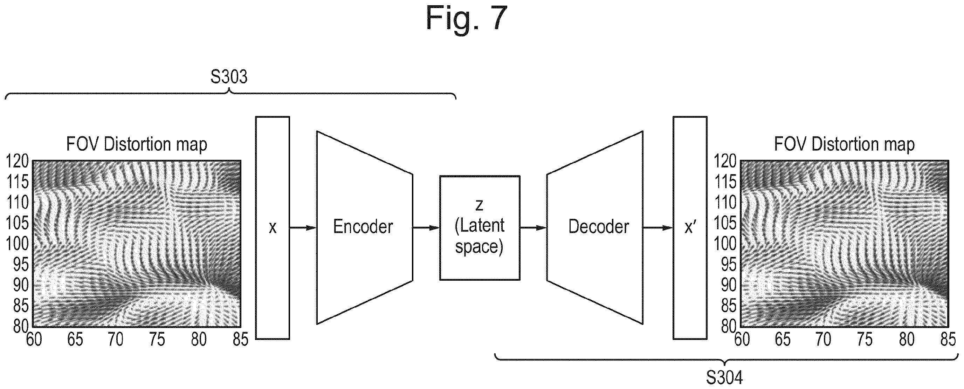

The training images used in training the network may comprise distortion maps. Figure 7 shows a schematic drawing illustrating steps S303 and S304 described above. In the illustration shown in Figure 7, distortion maps are used in training the encoder-decoder network. As shown, the encoder encodes a distortion map into the latent space in step S303 and the decoder decodes the encoding out of the latent space in step S304. The encoder, $E(x)$, converts the distortion map $x \in C^n$ into a lower-dimensional, real-valued continuous latent vector $z \in R^k$ (k≪n), where $n$ is the dimensionality of the distortion map and $k$ is the dimensionality of the latent space. The encoder also models the uncertainty of this latent vector. The decoder $D(z)$ converts the continuous latent vectors back into a copy of the input distortion map $x'$. The aim of the training of the encoder-decoder network is to set the weightings of the encoder and decoder such that the decoder can decode out of the latent space to obtain an image which is as similar as possible to the image originally encoded by the encoder. The distortion maps used in the training process above may be measured or simulated distortion maps. Large uncertainty means the network is not confident about the predictions for particular distortion maps. The network can be made more confident by adding more examples of high uncertainty distortion maps to the training set, thereby guiding the training. This interactive training process is known as active learning.

The encoder-decoder network is thus taught how to encode distortion maps into a low dimensional latent space and given a low-dimensional input vector z, the decoder is able to generate new distortion maps $D(z)$.

In any of the methods described above, the undistorted image may be obtained by computing the functional composition of the distorted image and the optimized distortion map.

In any of the examples discussed above, the reference image(s) and the distorted image(s) may be of a semiconductor substrate.

In any of the examples discussed above, at least one of the reference image and distorted image may be obtained using a scanning electron microscope (for example a voltage contrast SEM or cross-section SEM) or a transmission electron microscope (TEM), scatterometer or the like.

As described above, an encoder-decoder network is trained using pairs of reference images and distorted images. The encoder-decoder network allows image distortions, in particular FOV distortions, to be corrected. The performance of the encoder-decoder network is dependent on the number of reference images and distorted images, and in particular on the variety of the distorted images. A problem is that it is difficult to generate, i.e. measure, each pair of a reference image and a distorted image for training the encoder-decoder network. The performance of the encoder-decoder network in aligning distorted images may therefore be restricted by a lack of appropriate training data.

More generally, a number of different types of network/system may be trained using pairs of reference images and distorted images. The network/system may then be used to correct image distortions. The performance of the network/system may be improved by increasing the amount of training data.

A technique for increasing the number, and variety, of pairs of reference images and distorted images is to synthesize some of the distorted images. For example, synthetic distorted images may be generated by introducing random deformations into an actual distorted images. However, when random deformations are introduced, some of the synthetic distorted images will not comprise realistic deformations. The synthetic distorted images that do not comprise realistic deformations increase the required computing resources without improving performance.

Embodiments include techniques for generating realistic synthetic distorted images. Each of the generated synthetic distorted images may be used with a reference image to train an encoder-decoder network.

Embodiments obtain an input set of distorted images and generate an output set of distorted images. The input set may comprise a plurality of distorted images. The input set may comprise, for example, between 3 and 10 distorted images. Each of the distorted images in the input set may be an actual, i.e. real, distorted image that has been obtained by a SEM.

Embodiments may then use a model to determine distortion modes of the distorted images in the input set. The distortion modes may then be combined in a plurality of different ways. For each one of the plurality of combinations of the distortion modes, a synthetic distorted image may be then generated in dependence the combination. A plurality of synthetic distorted images may thereby be generated that are included in an output set of distorted images. There may be more distorted images in the output set than the input set.

Embodiments also include the above-described techniques for generating synthetic distorted images being cyclically repeated. That is to say, the output set of a cycle of the processes may be used as the input set for another cycle of the processes to further increase the number of synthetic distorted images.

Embodiments therefore increase the number, and variety, of pairs of reference images and distorted images that are available to train network/system, that may be an encoder-decoder network. An advantage of embodiments is that the synthetic distorted images may be generated in dependence on actual distorted images and so they are realistic.

Embodiments for generating synthetic distorted images are described in more detail below.

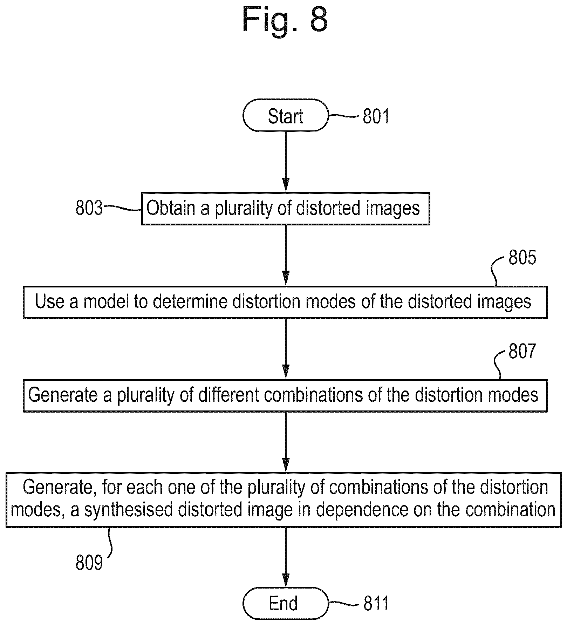

Figure 8 schematically shows some of the processes that may be used to generate a synthetic distorted images according to an embodiment.

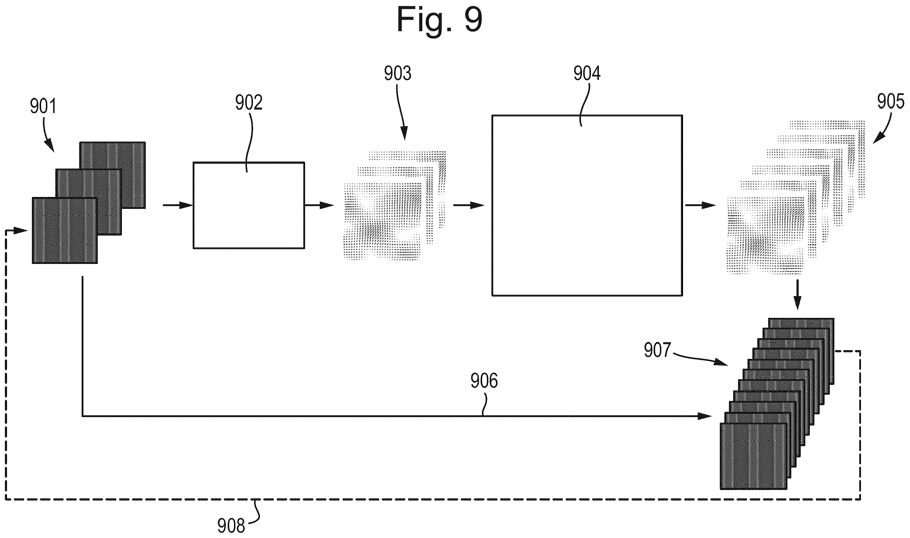

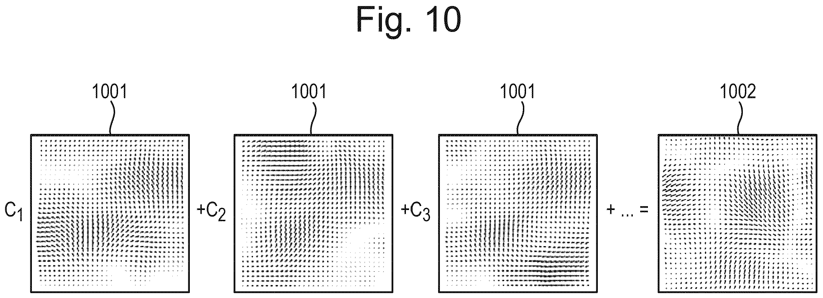

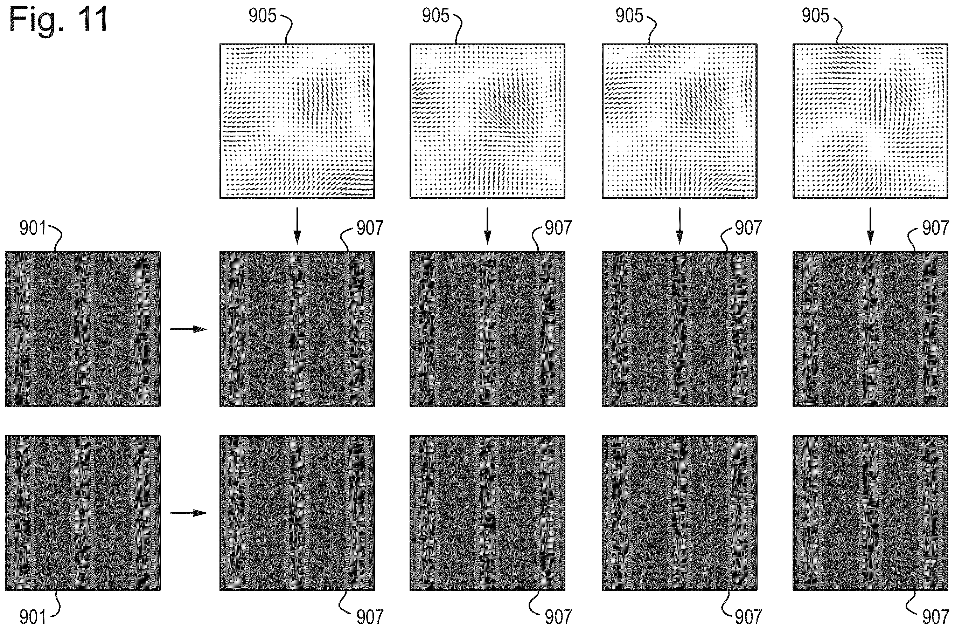

In step 801, the process starts. In step 803, a plurality of distorted images are obtained. In step 805, a model is used to determine distortion modes of the distorted images. This process is described in more detail later with reference to the model 904 as shown in Figure 9. In step 807, a plurality of different combinations of the distortion modes are generated. This process is described in more detail later with reference to the distortion modes 1001 as shown in Figure 10. In step 809, for each one of the plurality of combinations of the distortion modes, a synthetic distorted image is generated in dependence on the combination. This process is described in more detail later with reference to Figure 11. In step 811, the process ends.

Figure 9 schematically shows in more detail some of the processes that may occur when generating synthetic distorted images according to an embodiment.

An input set comprising a plurality of distorted images 901 is obtained. A distortion map generation process 902 is then performed for generating a respective distortion map for each image in the input set. Any of the processes described in the present document, or known processes, may be used to generate each distortion map 903. For example, each distortion map 903 may be generated by a convolutional network that is trained so that it may predict deformations that may be included in the distortion map 903. Each distortion map 903 may effectively be a grid with a vector at each pixel that defines the deformation at the pixel.

The plurality of distortion maps 903 are input into a model 904. The model 904 may be a statistical deformation model. The model 904 may perform a number of processes for determining distortion modes of the distorted images in dependence on the received distortion maps 903. The model 904 may be, for example, based on the models as disclosed in D. Rueckert, A. F. Frangi and J. A. Schnabel, "Automatic construction of 3-D statistical deformation models of the brain using nonrigid registration," in IEEE Transactions on Medical Imaging, vol. 22, no. 8, pp. 1014-1025, Aug. 2003, doi: 10.1109/TMI.2003.815865. The model 904 may generate a plurality of distortion modes. Each distortion mode may be representative of an image deformation that may be found in one or more of the distorted images of the input set. The distortion modes may all be orthogonal to each other. Each distortion mode may have the same, or similar, structure as a distortion map.

The model 904 for generating distortion modes may apply one or more locality processes. A locality process effectively isolates the deformations that occur within different regions of a distortion map 903. As a result of a locality process, a deformation may be handled independently from other deformations. The locality processes may ensure that each distortion mode is representative of a specific deformation, or deformations, that may be found in one or more of the distorted images 901 of the input set. Applying a locality process may comprise, for example, generating a co-variance matrix in dependence on one or more of the distortion maps 903 received by the model. One or more regions within the co-variance matrix may then be changed to zero values. The non-zeroed regions therefore relate to one or more deformations that were present in the input set of distorted images 901. The zeroing process ensures that these deformations are independent from the other deformations that occurred in the zeroed regions. The applied locality process may, for example, be based on any of the techniques disclosed in M. Wilms, et al.: "Multi-resolution multi-object statistical shape models based on the locality assumption". Med. Im. An., 2017.

The distortion modes may be combined with each other in a weighted combination. Figure 10 schematically shows the weighted combination process of a plurality of distortion modes 1001. The distortion modes 1001 each have a coefficient, $c_k$, applied to them and are combined with other distortion modes 1001 that have a coefficient applied to them. The result of each combination is a synthetic distortion mode 1002. The coefficients, $c_k$, may be determined in a number of different ways. For example, the coefficients, $c_k$, may be pre-determined, manually set or automatically set. The coefficients, $c_k$, may be randomly, or pseudo randomly, selected. In particular, the coefficients, $c_k$, may be sampled from a normal distribution. The standard deviation of the normal distribution may be determined by the model 904 for generating the distortion modes 1001. The distortion modes 1001 that are used in each combination may be randomly, or pseudo randomly, selected.

A respective synthetic distortion map 905 is generated in dependence on each of the different synthetic distortion modes 1002. As shown in Figure 11, each of the synthetic distortion maps 905 may be applied to each of the distorted images 901 in the input set to generate the distorted images 907 of the output set. Each distorted images 907 of the output set may, for example, be the product of a synthetic distortion maps 905 and a distorted images 901 in the input set. As shown by line 906 in Figure 9, the distorted images 901 in the input set may therefore be used to increase the total number of available distorted images 907.

If the number of distorted images 901 in the input data set is N, and the number of synthetic distortion maps 905 is M, then the number of synthetic distorted images 907 in the output set may be NM. The value of M is dependent on the number of synthetic distortion modes 1002 that are generated. The value of M may be greater than one. The value of M may be, for example, in the range 1 to 1000, such a 4 to 10.

As described above, and shown by line 908 in Figure 9, the distorted images 907 in the output set may be used as the input set of a subsequent cycle of the processes for generating synthetic distorted images 907. The number of synthetic distorted images 907 after two cycles may therefore be $NM^2$. The synthetic distorted images 907 output from each cycle may be used again as the input of another cycle to generate $NM^p$ synthetic distorted images 907, where p is the number of cycles.

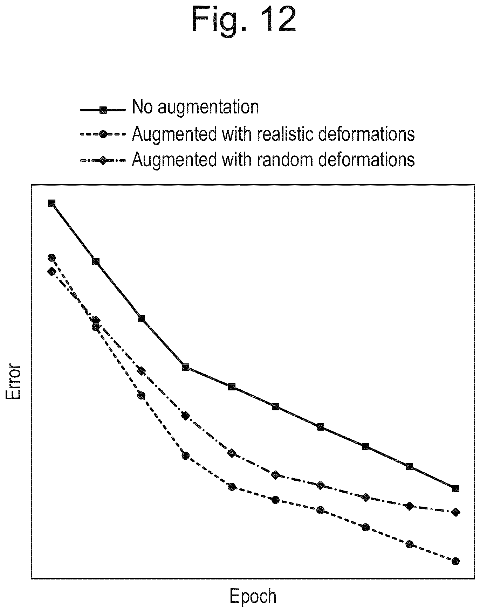

Figure 12 shows the results of the techniques according to embodiments.

An encoder-decoder network was trained over a number of iterations in the different scenarios of: a) the number of pairs of reference images and distorted images not being augmented (solid line); b) the number of pairs of reference images and distorted images being augmented by introducing random deformations into the distorted images (dot-dash line); and c) the number of pairs of reference images and distorted images being augmented by the above-described techniques of embodiments (dashed line). For each scenario, a training process was performed to determine a weighting with which to operate the encoder-decoder network. A image alignment process was then performed that comprised encoding, using the encoder operating with the determined weighting, a reference image and a distorted image into a latent space to form an encoding. A decoding process was then performed, using the decoder, to decode the encoding to form a distortion map. A spatial transform was then performed with the distorted image using the distortion map so as to obtain an aligned image.

In Figure 12, the y-axis shows the magnitude of error in the aligned image and the x-axis shows the number of iterations, i.e. epoch, that have been performed to train the encoder-decoder network. Figure 12 shows that the use of realistic synthetic distorted images, according to the technique of embodiments, provides a lower error in the image correction than the other scenarios of not augmenting the number of pairs of reference images and distorted images, as well as the use of distorted images that comprise random deformations.

Embodiments include a number of modifications and variations to the above-described techniques.

In particular, the embodiments for augmenting the number of distorted images may be used to increase the training data set for other machine learning techniques for aligning images, or for other applications. Embodiments may therefore be used with a number of different types of network/system and are not restricted to use with an encoder-decoder network. Embodiments may also be used to increase other types of training data set than SEM images.

In any of the examples discussed, the reference image may comprises a synthetic image. For example, the reference image may comprise an image rendered from a database, rather than an actual image of the substrate. For example, the synthetic image may be an image from the database used to manufacture a substrate. The reference image may thus be a synthetic image of the feature on the substrate.

In any of the methods described above for producing a distortion map based on a distorted image and a reference image, the distortion map produced by the methods may be used as a performance indicator. It may be used as an indicator for the performance of a metrology apparatus, e.g. a SEM. For example, when a distortion map is generated indicative of an unusually large level of distortion, this may indicate that the metrology apparatus is not functioning properly. Following such an indication, the metrology apparatus may be adjusted accordingly so as to perform more accurately.

The techniques disclosed herein can reduce the complexity of SEM processes.

The techniques disclosed herein can be used in in-line measurements for control loops and wafer disposition.

While specific techniques have been described above, it will be appreciated that the disclosure may be practiced otherwise than as described.

An embodiment may include a computer program containing one or more sequences of machine-readable instructions configured to instruct various apparatus as depicted in Figure 1 to perform measurement and optimization steps and to control a subsequent exposure process as described above. This computer program may be executed, for example, within the control unit LACU or the supervisory control system SCS of Figure 1 or a combination of both. There may also be provided a data storage medium (e.g., semiconductor memory, magnetic or optical disk) having such a computer program stored therein.

Although specific reference may have been made above to optical lithography, it will be appreciated that the techniques disclosed herein may be used in other applications, for example imprint lithography. In imprint lithography a topography in a patterning device defines the pattern created on a substrate. The topography of the patterning device may be pressed into a layer of resist supplied to the substrate whereupon the resist is cured by applying electromagnetic radiation, heat, pressure or a combination thereof. The patterning device is moved out of the resist leaving a pattern in it after the resist is cured.

The terms "radiation" and "beam" used herein encompass all types of electromagnetic radiation, including ultraviolet (UV) radiation (e.g., having a wavelength of or about 365, 355, 248, 193, 157 or 126 nm) and extreme ultra-violet (EUV) radiation (e.g., having a wavelength in the range of 1-100 nm), as well as particle beams, such as ion beams or electron beams. Implementations of scatterometers and other inspection apparatus can be made in UV and EUV wavelengths using suitable sources, and the present disclosure is in no way limited to systems using IR and visible radiation.

The term "lens", where the context allows, may refer to any one or combination of various types of optical components, including refractive, reflective, magnetic, electromagnetic and electrostatic optical components. Reflective components are likely to be used in an apparatus operating in the UV and/or EUV ranges.

As used herein, unless specifically stated otherwise, the term "or" encompasses all possible combinations, except where infeasible. For example, if it is stated that a component may include A or B, then, unless specifically stated otherwise or infeasible, the component may include A, or B, or A and B. As a second example, if it is stated that a component may include A, B, or C, then, unless specifically stated otherwise or infeasible, the component may include A, or B, or C, or A and B, or A and C, or B and C, or A and B and C.

Aspects of the present disclosure are set out in the following numbered clauses:

1. A non-transitory computer readable medium that has stored therein a computer program, wherein the computer program comprises code that, when executed by a computer system, instructs the computer system to perform a method for generating synthetic distorted images, the method comprising:

obtaining an input set that comprises a plurality of distorted images;
determining, using a model, distortion modes of the distorted images in the input set;
generating a plurality of different combinations of the distortion modes;
generating, for each one of the plurality of combinations of the distortion modes, a synthetic distorted image in dependence on the combination; and
including each of the synthetic distorted images in an output set.

2. The computer readable medium according to clause 1, wherein generating each synthetic distorted image in the output set comprises:

> modelling, in dependence on one of the plurality of combinations of the distortion modes, a distortion map; and applying the modelled distortion map to a distorted image in the input set.

3. The computer readable medium according to clause 1 or 2, further comprising, for each one of the distorted images in the input set, generating a distortion map in dependence the distorted image; wherein the model determines the distortion modes in dependence on the distortion maps of the distorted images in the input set.

4. The computer readable medium according to any preceding clause, wherein the model determines the distortion modes in dependence on one or more locality processes.

5. The computer readable medium according to clause 4, wherein the one or more locality processes effectively isolate the deformations that occur in different regions of each distortion map from each other.

6. The computer readable medium according to any preceding clause, wherein the distortion modes are all orthogonal to each other.

7. The computer readable medium according to any preceding clause, wherein each of the plurality of different combinations of the distortion modes is a weighted combination of distortion modes.

8. The computer readable medium according to clause 7, wherein the coefficients of the weighted combinations are sampled from a normal distribution.

9. The computer readable medium according to any preceding clause, wherein the plurality of different combinations of the distortion modes are generated in dependence on random, or pseudo-random, combinations of the distortion modes.

10. The computer readable medium according to any preceding clause, wherein the model is a statistical deformation model.

11. The computer readable medium according to any preceding clause, further comprising performing two or more cycles of the processes for generating an output set of distorted images in dependence on an input set of distorted images;
wherein, for each cycle apart from the last cycle, the output set of distorted images of the cycle is used as the input set of distorted images to the subsequent cycle.

12. The computer readable medium according to any preceding clause, wherein each distorted image is a scanning electron microscope image.

13. A computer-implemented method for generating synthetic distorted images, the method comprising:

> obtaining an input set that comprises a plurality of distorted images;
> determining, using a model, distortion modes of the distorted images in the input set;
> generating a plurality of different combinations of the distortion modes;
> generating, for each one of the plurality of combinations of the distortion modes, a synthetic distorted image in dependence on the combination; and
> including each of the synthetic distorted images in an output set.

14. The method according to clause 13, wherein generating each synthetic distorted image in the output set comprises:

> modelling, in dependence on one of the plurality of combinations of the distortion modes, a distortion map; and applying the modelled distortion map to a distorted image in the input set.

15. The method according to clause 13 or 14, further comprising, for each one of the distorted images in the input set, generating a distortion map in dependence the distorted image;
wherein the model determines the distortion modes in dependence on the distortion maps of the distorted images in the input set.

16. The method according to any of clauses 13 to 15, wherein the model determines the distortion modes in dependence on one or more locality processes.

17. The method according to clause 16, wherein the one or more locality processes effectively isolate the deformations that occur in different regions of each distortion map from each other.

18. The method according to any of clauses 13 to 17, wherein the distortion modes are all orthogonal to each other.

19. The method according to any of clauses 13 to 18, wherein each of the plurality of different combinations of the distortion modes is a weighted combination of distortion modes.

20. The method according to clause 19, wherein the coefficients of the weighted combinations are sampled from a normal distribution.

21. The method according to any of clauses 13 to 20, wherein the plurality of different combinations of the distortion modes are generated in dependence on random, or pseudo-random, combinations of the distortion modes.

22. The method according to any of clauses 13 to 21, wherein the model is a statistical deformation model.

23. The method according to any of clauses 13 to 22, further comprising performing two or more cycles of the processes for generating an output set of distorted images in dependence on an input set of distorted images; wherein, for each cycle apart from the last cycle, the output set of distorted images of the cycle is used as the input set of distorted images to the subsequent cycle.

24. The method according to any of clauses 13 to 23, wherein each distorted image is a scanning electron microscope image.

25. A computer program comprising code that, when executed by a computer system, instructs the computer system to perform a method of any of clauses 13 to 24.

26. A non-transitory computer readable medium that has stored therein a computer program according to clause 25.

27. A system for generating synthetic distorted images, the system comprising one or more processors configured by machine-readable instructions to perform a method of any of clauses 13 to 24.

28. A method for training a machine learning model, the method comprising:

receiving a plurality of distorted images;
generating a plurality of synthetic distorted images in dependence on distortions in the received distorted images; and
training the machine learning model in dependence on the generated synthetic distorted images.

29. The method according to clause 28, wherein generating the plurality of synthetic distorted images comprises performing to the techniques according to any of clauses 13 to 24.

30. A computer program comprising code that, when executed by a computer system, instructs the computer system to perform a method of any of clauses 28 or 29.

31. A non-transitory computer readable medium that has stored therein a computer program according to clause 30.

32. A system for training a machine learning model, the system comprising one or more processors configured by machine-readable instructions to perform a method of any of clauses 28 or 29.

33. A method for aligning a distorted image, the method comprising:

determining a transformation, by use of a machine learning model, for aligning a distorted image; and
aligning the distorted image based on the determined transformation;

wherein the machine learning model has been trained according to the method of any of clauses 28 or 29.

34. A computer program comprising code that, when executed by a computer system, instructs the computer system to perform a method of clause 33.

35. A non-transitory computer readable medium that has stored therein a computer program according to clause 34.

36. A system for aligning a distorted image, the system comprising one or more processors configured by machine-readable instructions to perform the method of clause 33.

37. A method for determining a weighting for use in an encoder-decoder network, the method comprising:

receiving a plurality of distorted images;
generating a plurality of synthetic distorted images in dependence on distortions in the received distorted images; and
determining the weighting in dependence on the synthetic distorted images.

38. The method according to clause 37, wherein generating a plurality of synthetic distorted images comprises performing the method of any of clauses 13 to 24.

39. A computer program comprising code that, when executed by a computer system, instructs the computer system to perform the method of any of clauses 37 or 38.

40. A non-transitory computer readable medium that has stored therein a computer program according to clause 39.

41. A system for determining a weighting for use in an encoder-decoder network, the system comprising one or more processors configured by machine-readable instructions to perform the method of any of clauses 37 or 38.

42. A method for aligning a distorted image, the method comprising:
performing, using an encoder-decoder network operating with a weighting determined according to the method of clause 37 or 38, the following:

encoding, using the encoder, a reference image and a distorted image into a latent space to form an encoding;

decoding, using the decoder, the encoding to form a distortion map; and

spatially transforming the distorted image using the distortion map so as to obtain an aligned image.

43. A computer program comprising code that, when executed by a computer system, instructs the computer system to perform the method of clause 42.

44. A non-transitory computer readable medium that has stored therein a computer program according to clause 43.

45. A system for aligning a distorted image, the system comprising one or more processors configured by machine-readable instructions to perform the method of clause 42.

46. A method of manufacture of a semiconductor substrate, the method comprising the steps of:

manufacturing at least part of the semiconductor substrate;

performing the method according to as defined in any one of clauses 33 or 42;

analyzing the aligned image to obtain a metric of the image; and

comparing the metric to a target metric and taking remedial action when the metric does not meet the target metric.

47. A semiconductor substrate manufacturing system comprising apparatuses configured to perform the method of clause 46.

48. An inspection tool comprising:

an imaging system configured to image a portion of a semiconductor substrate; and

an image analysis system configured to perform the method for aligning a distorted image according to as defined in any one of clauses 33 or 42.

Having described embodiments of the invention it will be appreciate that variations thereon are possible within the spirit and scope of the disclosure and the appended claims as well as equivalents thereto.

## Claims

1. A non-transitory computer readable medium that has stored therein a computer program, wherein the computer program comprises code that, when executed by a computer system, instructs the computer system to perform a method for generating synthetic distorted images, the method comprising:

obtaining an input set that comprises a plurality of distorted images;

determining, using a model, distortion modes of the distorted images in the input set;

generating a plurality of different combinations of the distortion modes;

generating, for each one of the plurality of combinations of the distortion modes, a synthetic distorted image in dependence on the combination; and

including each of the synthetic distorted images in an output set.

2. The computer readable medium according to claim 1, wherein generating each synthetic distorted image in the output set comprises:

modelling, in dependence on one of the plurality of combinations of the distortion modes, a distortion map; and

applying the modelled distortion map to a distorted image in the input set.

3. The computer readable medium according to claim 1, further comprising, for each one of the distorted images in the input set, generating a distortion map in dependence the distorted image; wherein the model determines the distortion modes in dependence on the distortion maps of the distorted images in the input set.

4. The computer readable medium according to claim 1, wherein the model determines the distortion modes in dependence on one or more locality processes.

5. The computer readable medium according to claim 4, wherein the one or more locality processes effectively isolate the deformations that occur in different regions of each distortion map from each other.

6. The computer readable medium according to claim 1, wherein the distortion modes are all orthogonal to each other.

7. The computer readable medium according to claim 1, wherein each of the plurality of different combinations of the distortion modes is a weighted combination of distortion modes.

8. The computer readable medium according to claim 7, wherein the coefficients of the weighted combinations are sampled from a normal distribution.

9. The computer readable medium according to claim 1, wherein the plurality of different combinations of the distortion modes are generated in dependence on random, or pseudo-random, combinations of the distortion modes.

10. The computer readable medium according to claim 1, wherein the model is a statistical deformation model.

11. The computer readable medium according to claim 1, further comprising performing two or more cycles of the processes for generating an output set of distorted images in dependence on an input set of distorted images; wherein, for each cycle apart from the last cycle, the output set of distorted images of the cycle is used as the input set of distorted images to the subsequent cycle.

12. The computer readable medium according to claim 1, wherein each distorted image is a scanning electron microscope image.

13. A system for generating synthetic distorted images, the system comprising the computer readable medium according to claim 1.

14. A system for aligning a synthetic distorted image, the system comprising:

   a computer readable medium according to claim 1 for generating synthetic distorted images;
   a non-transitory computer readable medium that has stored therein a computer program, wherein the computer program comprises code that, when executed by a computer system, instructs the computer system to perform a method for:

      training a machine learning model in dependence on the generated synthetic distorted images; and
      determining a transformation, by use of the machine learning model, for aligning a distorted image; and

   aligning the distorted image based on the determined transformation.

15. An inspection tool comprising:

   an imaging system configured to image a portion of a semiconductor substrate; and
   an image analysis system that comprises the system of claim 14 and is configured to perform a method for aligning a distorted image.

# Fig. 1

# Fig. 2

| S1 | | S2 | | S3 | | S4 |
|---|---|---|---|---|---|---|
| Image Pre-processing | ⇒ | Pattern Processing | ⇒ | D2DB Alignment D2D Alignment | ⇒ | D2DB Detection D2D Detection and ADC |

# Fig. 3

```
                    ( Start )——S101
                         │
                         ▼
S102——┌──────────────────────────────┐◄───────────┐
       │  Start encoder and decoder to operate      │
       │        with test weighting    │            │
       └──────────────────────────────┘             │
                         │                           │
                         ▼                           │
S103——┌──────────────────────────────┐◄──────┐     │
       │ Select reference image and distorted image │ │
       └──────────────────────────────┘       │     │
                         │                     │     │
                         ▼                     │     │
S104——┌──────────────────────────────┐        │     │
       │ Encode reference image and distorted image │ │
       └──────────────────────────────┘       │     │
                         │                     │     │
                         ▼                     │     │
S105——┌──────────────────────────────┐        │     │
       │ Decode the encoding to form distortion map │ │
       └──────────────────────────────┘       │     │
                         │                     │     │
                         ▼                     │     │
S106——┌──────────────────────────────┐        │   S113
       │  Spatial transform distorted image by      │   │
       │         distortion map        │      │  ┌────────────┐
       └──────────────────────────────┘      │  │ Adjust test│
                         │                    │  │ weighting  │
                         ▼                    │  └────────────┘
S107——┌──────────────────────────────┐       │       ▲
       │     Determine Loss Function   │      │       │
       └──────────────────────────────┘      │       │
                         │                    │       │
 S108                    ▼               No   │       │
    ◇─────────────────────────────────◇──────┘       │
    │   All image combinations analysed ?  │          │
    ◇─────────────────────────────────◇              │
                         │ Yes                         │
                         ▼                             │
S109——┌──────────────────────────────┐               │
       │  Combine loss function for each             │
       │ combination and assign to test weighting    │
       └──────────────────────────────┘               │
                         │                             │
 S110                    ▼               No            │
    ◇─────────────────────────────────◇───────────────┘
    │      Termination condition met ?     │
    ◇─────────────────────────────────◇
                         │ Yes
                         ▼
S111——┌──────────────────────────────┐
       │   Output optimised test weighting  │
       └──────────────────────────────┘
                         │
                         ▼
                    ( End )——S112
```

# Fig. 4

EP 4 123 583 A1

# Fig. 5

Start — S201

S202 — Spatially transform distorted image by test latent vector

S203 — Compare test aligned image to reference image

S204 — Obtain similarity metric

S205 — Plurality of test latent vectors tested ? — No

Yes

S206 — Determine optimized latent vector

S207 — Determine optimized distortion map

S208 — Spatially transform distorted image by optimized distortion map

End — S209

# Fig. 6

Start — S301

S302 — Select weighting

S303 — Encode training images using weighting

S304 — Decode training encodings

S305 — Obtain training similarity metric

S306 — Optimized similarity metric achieved? — No

Yes

S307 — Set optimized weighting

End — S309

# Fig. 7

# Fig. 8

Start —801

803— Obtain a plurality of distorted images

805
Use a model to determine distortion modes of the distorted images

807
Generate a plurality of different combinations of the distortion modes

Generate, for each one of the plurality of combinations of the distortion modes, a synthesised distorted image in dependence on the combination

809

End — 811

Fig. 9

Fig. 10

Fig. 11

28

# Fig. 12

---■— No augmentation
---●--- Augmented with realistic deformations
---◆--- Augmented with random deformations

Error

Epoch

Europäisches
Patentamt

European
Patent Office

Office européen
des brevets

# EUROPEAN SEARCH REPORT

**Application Number**

EP 21 18 6830

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/265211 A1 (NASRABADI NASSER M [US] ET AL) 20 August 2020 (2020-08-20) | 1-3,6,7, 10,12-15 | INV. G06T11/00 |
| Y | * paragraph [0023] - paragraph [0041] * | 9,11 | G06T5/00 |
| A | SI XUANBIN ET AL: "Detection and Rectification of Distorted Fingerprints", IEEE TRANSACTIONS ON PATTERN ANALYSIS AND MACHINE INTELLIGENCE, IEEE COMPUTER SOCIETY, USA, vol. 37, no. 3, March 2015 (2015-03), pages 555-568, XP011572401, ISSN: 0162-8828, DOI: 10.1109/TPAMI.2014.2345403 [retrieved on 2015-02-03] * section 4 * | 1-15 | |
| X | UZUNOVA HRISTINA ET AL: "Training CNNs for Image Registration from Few Samples with Model-based Data Augmentation", 4 September 2017 (2017-09-04), ADVANCES IN INTELLIGENT DATA ANALYSIS XIX; [LECTURE NOTES IN COMPUTER SCIENCE; LECT.NOTES COMPUTER], SPRINGER INTERNATIONAL PUBLISHING, CHAM, PAGE(S) 223 - 231, XP047527961, ISSN: 0302-9743 ISBN: 978-3-540-69901-9 [retrieved on 2017-09-04] | 1-6,8, 10,12-15 | |
| Y | * sections 2 and 3 * | 9,11 | |
| Y | US 10 984 284 B1 (CORCORAN THOMAS [US] ET AL) 20 April 2021 (2021-04-20) * column 4, line 5 - line 65 * | 9,11 | |

| | TECHNICAL FIELDS SEARCHED (IPC) |
|---|---|
| | G06T |

The present search report has been drawn up for all claims

| Place of search | Date of completion of the search | Examiner |
|---|---|---|
| Munich | 17 January 2022 | Rockinger, Oliver |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**Application Number**

**EP 21 18 6830**

---

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

---

## LACK OF UNITY OF INVENTION

The Search Division considers that the present European patent application does not comply with the requirements of unity of invention and relates to several inventions or groups of inventions, namely:

**see sheet B**

☐ All further search fees have been paid within the fixed time limit. The present European search report has been drawn up for all claims.

☒ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION
SHEET B**

Application Number

EP 21 18 6830

The Search Division considers that the present European patent application does not comply with the requirements of unity of invention and relates to several inventions or groups of inventions, namely:

```
      1. claims: 1-15

            generating synthetic distorted images

      1.1. claims: 14, 15

            aligning a synthetic distorted image
                          ---


  Please note that all inventions mentioned under item 1, although not
  necessarily linked by a common inventive concept, could be searched
  without effort justifying an additional fee.
```

## ANNEX TO THE EUROPEAN SEARCH REPORT
## ON EUROPEAN PATENT APPLICATION NO.

EP 21 18 6830

This annex lists the patent family members relating to the patent documents cited in the above-mentioned European search report.
The members are as contained in the European Patent Office EDP file on
The European Patent Office is in no way liable for these particulars which are merely given for the purpose of information.

17-01-2022

| Patent document cited in search report | | Publication date | Patent family member(s) | Publication date |
|---|---|---|---|---|
| US 2020265211 | A1 | 20-08-2020 | NONE | |
| US 10984284 | B1 | 20-04-2021 | NONE | |

EPO FORM P0459

For more details about this annex : see Official Journal of the European Patent Office, No. 12/82

**EP 4 123 583 A1**

**REFERENCES CITED IN THE DESCRIPTION**

**Patent documents cited in the description**

- US 2012008127 A1

**Non-patent literature cited in the description**

- **D. RUECKERT ; A. F. FRANGI ; J. A. SCHNABEL.** Automatic construction of 3-D statistical deformation models of the brain using nonrigid registration. *IEEE Transactions on Medical Imaging,* August 2003, vol. 22 (8), 1014-1025

- **M. WILMS et al.** Multi-resolution multi-object statistical shape models based on the locality assumption. *Med. Im. An.,* 2017